# EUROPÄISCHE PATENTANMELDUNG

(11) **EP 1 063 537 A2**
(43) Veröffentlichungstag der Anmeldung: **27.12.2000**
(21) Anmeldenummer: 00118964.6
(22) Anmeldetag: 19.11.1996
(51) Int. Cl.: G01T 1/00

(54) **Optische Anordnung und Verfahren zum elektronischen Erfassen eines Röntgenbilds**

(30) Priorität: 24.11.1995 CH 333095
(62) Teilanmeldung aus: 96937157.4
(71) Anmelder: Swissray Medical AG, 6280 Hochdorf (CH)
(72) Erfinder: Wägli, Peter, 5620 Bremgarten (CH); Laupper, Ruedi G., 6285 Hitzkirch (CH)
(74) Vertreter: Müller, Christoph Emanuel

(57) **Zusammenfassung**

Eine Anordnung zum elektronischen Erfassen eines Röntgenbilds weist einen Converter (4), insbesondere eine Szintillations-Folie (3) auf. Auf der Abbildungsfläche (5) der Szintillations-Folie (3) wird durch Röntgenstrahlen ein sichtbares Bild erzeugt. Es sind wenigstens zwei Spiegel (7) vorgesehen, die Segmente der Abbildungsfläche (5) abbilden. Ausserdem sind elektronische Kamera-Systeme (8) zum Umwandeln der von den Spiegeln (7) reflektierten Bild-Segmente in elektrische Signale vorgesehen. Der Strahlengang (9) zwischen Kamera-Systemen (8) und Spiegeln (7) verläuft etwa parallel zur Abbildungsfläche (5).

## Beschreibung

Die Erfindung betrifft eine Anordnung zum elektronischen Erfassen eines Röntgenbilds sowie ein Verfahren zum Erfassen eines durch Röntgenstrahlen auf der Oberfläche eines Converters erzeugten sichtbaren Bilds.

Röntgenbilder im Bereich des sichtbaren Lichts werden traditionell an Flächen erzeugt, welche die vom durchstrahlten Objekt modulierten Röntgenstrahlen in sichtbares Licht Umsetzen. Allgemein verbreitet werden dazu Szintillations-Folien eingesetzt. Derartige Folien enthalten z.B. Cäsiumiodid. Alternativ sind auch andere Primärbild-Anordnungen, wie z.B. beschichtete Glas- oder Kunststoff-Scheiben denkbar.

Zur Fernseh-Uebertragung von Röntgenbildern wurden auch schon Fernsehkameras eingesetzt. Dabei wird ein Röntgenbildverstärker verwendet, der die vom durchstrahlten Objekt modulierten Röntgenstrahlen aufnimmt und ein verstärktes Ausgangsbild über eine lichtstarke Optik auf die Projektionsfläche einer Fernsehkamera weitergibt. Die Fernsehkamera liefert elektrische Signale, die im Monitor zum Durchleuchtungsbild zurückverwandelt werden. Der Bildverstärker besteht dabei aus einer evakuierten Röhre, an dessen Stirnseite sich als Primärbild-Anordnung ein Röntgenleuchtschirm befindet. Unmittelbar dahinter befindet sich die Photokathode, aus der nach dem Lichteinfall Elektronen austreten, deren Zahl der Anregung des Leuchtschirm durch die Röntgenstrahlen proportional ist. Die Bildverstärkung entsteht dadurch, dass die emittierten Photoelektronen durch ein elektrisches Feld beschleunigt werden und den gegenüberliegenden Ausgangsleuchtschirm zum mehrfach intensivierten Leuchten anregen. Das Ausgangsbild kann auf verschiedene Weise zur Eingangsoptik der Fernsehaufnahmeröhre übertragen werden. Bekannt sind z.B. elektrostatische Abbildungen, bei welchen das Bild auf dem Eingangsfenster elektronenoptisch auf das Ausgangsfenster verkleinert und so an das Fenster der Kamera angepasst wird. Es kann auch durch eine optische Linsenanordnung übertragen werden, bei der sich das Ausgangsbild des Bildverstärkers in der Brennebene eines ersten Objektivs befindet, wobei das Bild in der Brennebene des Kameraobjektivs erzeugt wird. Statt der optischen Uebertragung lasst sich das Bild von der Ausgangsseite des Bildverstärkers auch mittels Faseroptik auf die Eingangsoptik der Fernsehkamera übertragen.

Derartige Fernseh-Systeme sind ausserordentlich aufwendig, erfordern speziell angepasste Röntgengeräte und sind aufgrund des grossen Platzbedarfs in Standard-Röntgengeräte nicht integrierbar.

In der Praxis werden deshalb meist Laser-Image-Systeme eingesetzt, um Röntgeribilder in elektrische Signale umzuwandeln und die Bildsignale zu speichern, zu übertragen oder auf andere Weise zu verarbeiten. Bei Laser-Image-Systemen werden vorwiegend Speicherfolien verwendet, welche die modulierte Röntgenstrahlung in metastabilem Zustand speichern. Die Folien werden durch einen HeNe-Laser zum Leuchten angeregt. Dadurch kann das Signal elektrooptisch gewandelt werden. Alternativ können auch herkömmlich belichtete Filme "gescannt" werden. Dabei wird also das Primärbild auf der Folie bzw. dem Film erzeugt, was den Einsatz konventioneller Filmkassetten ("Bucky's") ermöglicht. Andererseits ist mit solchen Anordnungen keine On-Line-Uebertragung möglich, sondern zur Umwandlung ist ein separater Abtastvorgang erforderlich.

Aus IEEE Transaction on Nuclear Science (ICE Vol 40, No 4, Aug 1993/Seite 1275) ist es bekannt, ein auf einem Szintillationsschirm erzeugtes Bild mit einem Spiegel umzulenken und auf mehrere, nebeneinanderliegende CCD Kameras umzulenken. Eine Reduktion der Bauhöhe der Kameraanordnung lässt sich damit nicht erzielen.

Aufgabe der Erfindung ist es, eine Anordnung und ein Verfahren zu schaffen, welche die On-Line-Erfassung und Uebertragung sowie die Darstellung von Röntgenbildern auf wirtschaftlich einfache Weise ermöglicht und auch das nachträgliche Umrüsten konventioneller Röntgengeräte technisch ermöglicht.

Diese Aufgabe wird gemäss Kennzeichen der Patentansprüche gelöst.

Durch die Anordnung von zwei oder mehr Spiegeln lässt sich einerseits das Bild in Segmente aufteilen, was eine Miniaturisierung der optischen Systeme zulässt. Ersichtlicherweise werden auch die Umlenkanordnungen, insbesondere Spiegel, dadurch verkleinert, dass sie nur einzelne Segmente des Bilds erfassen müssen.

Ausserdem wird durch die Umlenkung erreicht, dass der Strahlengang parallel zur Oberfläche des Converters verläuft, wodurch sich die Kamera-Systeme seitlich vom Converter anordnen lassen. Dies wiederum reduziert die Aufbauhöhe der Anordnung, so dass sich die erfindungsgemässe Anordnung in konventionelle Filmkassetten einbauen lässt. Als Umlenkanordnung eignen sich sowohl konventionelle Spiegel als auch Prismen oder andere optische Ablenksysteme. Beim Einsatz eines Prismas ist es z.B. denkbar, Linsensysteme mit zu integrieren. Wenn der Spiegel bzw. die Umlenkanordnung etwa V-förmig zu einer Achse der Abbildungsfläche angeordnet ist, ergibt sich eine Bildteilung. Dabei ist es zweckmässig, wenn sich die beiden Bild-Segmente, also Bildhälften, leicht überlappen, so dass keine Bildinformation verloren geht. Dies lässt sich z.B. dadurch erreichen, dass die beiden Spiegel unter einem Winkel von etwas mehr als 90° zueinander angeordnet sind. Auch der Einsatz gekrümmter Spiegelflächen mit entsprechender elektronischer oder optischer Entzerrung bei der nachfolgenden Verarbeitung ist denkbar.

Als Kamera-Systeme eignen sich besonders CCD-Kameras, die eine Miniaturisierung der Gesamtanordnung zulassen.

Die Verarbeitung der von den Kamera-Systemen erzeugten elektronischen Bilder ist Stand der Technik. So sind heute Systeme im Markt erhältlich, mit denen sich die Bilder verschiedener Kameras mischen bzw. wieder zu einem Gesamtbild kombinieren lassen. Die Kamera-Systeme müssen dabei nicht unbedingt unmittelbar im Strahlengang der Umlenkanordnung angeordnet sein. Selbstverständlich ist auch Mehrfach-Umlenkung oder die Zwischenschaltung von Lichtleiter-Anordnungen, Bildverstärkern und anderen optischen und/oder elektronischen Bildbearbeitungs-Einrichtungen möglich.

Zudem ist es auch möglich, die Kamera-Systeme seitlich auswechselbar an einer mit den Umlenkspiegeln versehenen Filmkassette lösbar oder austauschbar anzubringen. Dadurch kann einerseits das relativ teure Kamera-System für eine Mehrzahl von Filmkassetten verwendet werden. Andererseits ist Wartung und Reparatur auf diese Weise einfacher.

Die verarbeitung der elektronischen Bildsignale in einer Datenverarbeitungsanlage kann z. B. so vorgesehen werden, dass zum Sekundär-Bild zusammengefügte Signale an ein Terminal oder an mehrere Terminals weitergegeben werden. Die Signale lassen sich auch speichern oder Sekundär-Bilder können als Hardcopy z. B. über einen Plotter ausgegeben werden.

Die Erfindung ist im Folgenden in Ausführungsbeispielen anhand der Zeichnungen näher erläutert:

Es zeigen:
- Figur 1: die schematische Darstellung einer erfindungsgemässen Anordnung zum elektronischen Erfassen eines Röntgenbilds in Seitenansicht,
- Figur 2: die Anordnung gemäss Figur 1 in perspektivischer Darstellung,
- Figur 3: ein abgewandeltes Ausführungsbeispiel mit zwei KameraSystemen und
- Figur 4: ein weiter abgewandeltes Ausführungsbeispiel der Erfindung.

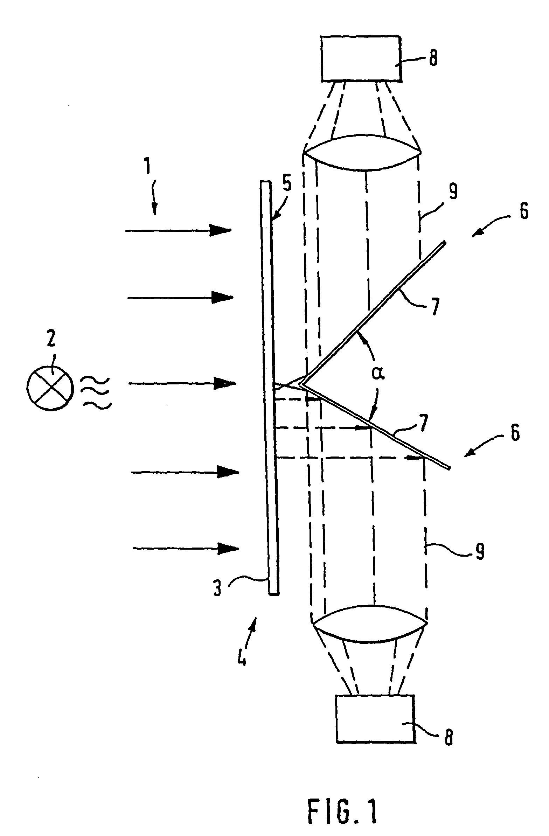

Gemäss Figur 1 ist im Strahlengang 1 einer Röntgenröhre 2 eine Szintillations-Folie 3 angeordnet, die als Converter 4 zum Umwandeln der vom durchstrahlten Objekt modulierten Röntgenstrahlen in sichtbares Licht vorgesehen ist. Auf der Abbildungsfläche 5 entsteht so ein Bild, das von zwei Umlenkanordnungen 6 erfasst und so abgebildet wird, dass es von KameraSystemen 8 aufgenommen werden kann. Die Umlenkanordnungen sind dabei als V-förmig zueinander angeordnete Spiegel 7 ausgebildet. Die Spiegel sind unter einem Winkel α zueinander angeordnet, der etwas grösser ist als 90°. Die beiden Spiegel 7 erfassen damit etwas mehr als nur die Hälfte des auf der Abbildungsfläche 5 dargestellten Bilds, so dass Bild-Verluste mit Sicherheit vermieden werden.

Der optische Strahlengang 9 zwischen den Spiegeln 7 und den Kamera-Systemen 8 verläuft dabei etwa parallel zur Abbildungsoberfläche 5, so dass die Kamera-Systeme 8 neben dem Converter 4 angeordnet werden können. Damit wird die Dicke des Gesamtaufbaus minimiert.

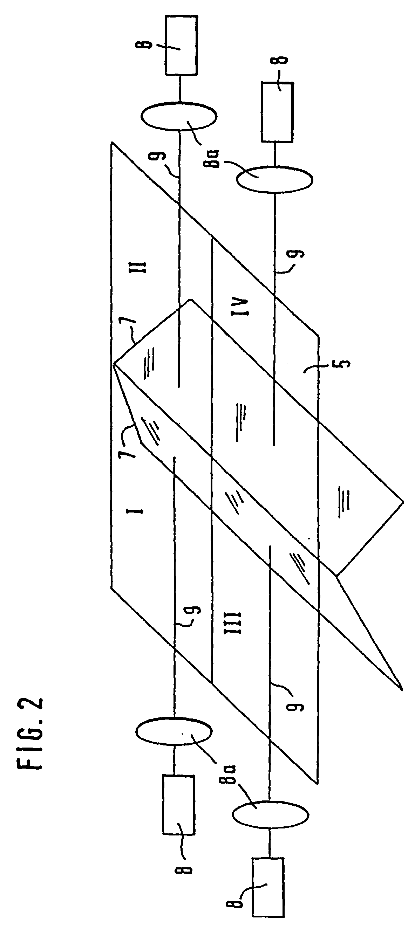

Figur 2 zeigt die Anordnung gemäss Figur 1. Wie dargestellt, wird das von einem Spiegel 7 reflektierte Bild jeweils durch zwei separate CCD-Kameras 8 erfasst. Das auf der Abbildungsfläche 5 der Szintillations-Folie 3 (Figur 1) erzeugte Bild wird demnach in vier einzelne Segmente 1, II, III und IV "zerlegt". Durch Einsatz von zwei Spiegeln und Anordnung von vier KameraSystemen lässt sich ganz besonders optimal die Höhe des Gesamtaufbaus minimieren. Vor allem wird auch die den KameraSystemen 8 zugeordnete Optik 8a (Linsensysteme) in der Grösse minimiert. In der Praxis haben sich als Linsensysteme 8a Objektive mit hoher Lichtstärke (F gleich oder kleiner 1.0) bewährt, die vier Segmente erfassen und auf einen CCD-Chip abbilden. Besonders geeignet sind dabei CCD-Chips mit einem Format von 1024x1280 Pixel. Damit lassen sich Bilder mit ausreichender Auflösung erzeugen, wobei das Normlformat der Darstellung 35x43 cm entspricht. Das zusammenfügen der von den CCD-Kameras 8 erzeugten elektronischen Bildsignale zu einem Gesamtbild kann auf beliebige Weise in einer Bild-Mischanordnung erfolgen.

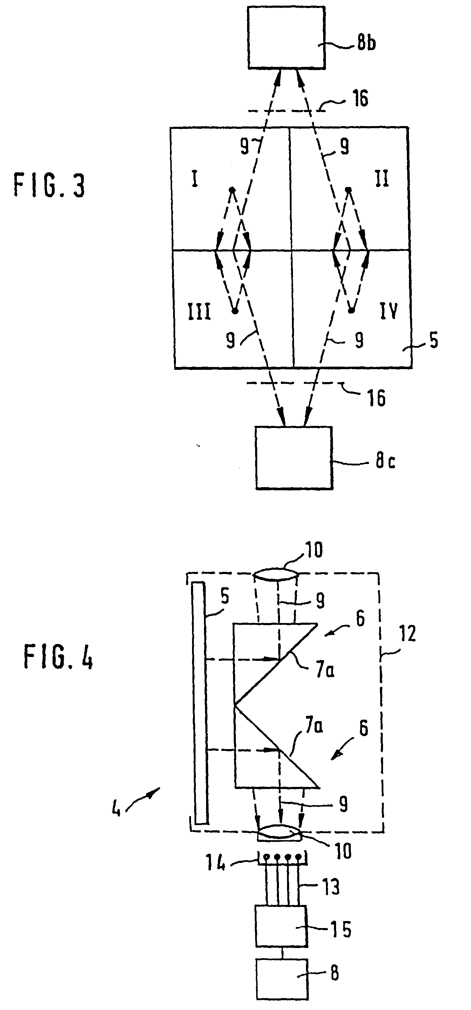

Figur 3 zeigt ein Ausführungsbeispiel, bei dem die vier BildSegmente I, II, III und IV jeweils paarweise gespiegelt werden, wobei die Bild-Segmente I und II an ein erstes Kamera-System 8b umgelenkt und die Bild-Segmente III und IV an ein zweites Kamera-System 8c umgelenkt werden. Bei dieser Anordnung ist eine CCD-Kamera mit einem entsprechend angepassten Format erforderlich. Alternativ könnten auch in den Strahlengängen 9 Unterbrecher 16 angeordnet werden, welche abwechselnd Lichtstrahlen von einem der Segmente I oder II und III oder IV zulassen. Eine derartige sequentielle Bildverarbeitung erfordert höheren Aufwand beim Mischen, reduziert jedoch die Kosten für die CCD-Kamera. Derartige Bild-Unterbrechung lässt sich auch in elektronischen Bildverstärkern erreichen, die Bestandteil der CCD-Kamera sein können. Dementsprechend könnte jedem der Strahlengänge I, II, III und IV je ein Bildverstärker zugeordnet sein, wobei dann die Bildverstärker paarweise mit je einer CCD-Kamera optisch verbunden sind. Eine solche Anordnung mit Bildverstärker und CCD-Kamera ist in Figur 4 schematisch dargestellt. Bei diesem Ausführungsbeispiel wird das auf der Abbildungsfläche 5 eines Converters 4 dargestellte Bild von zwei Prismen 7a erfasst. Die von den Prismen reflektierten Lichtstrahlen (Strahlengang 9) werden durch Linsen 10 gebündelt. Die Prismen 7a sowie die Linsen 10 sind zusammen mit dem Converter 4 in einem schematisch angedeuteten Gehäuse 12 untergebracht. Seitlich am Gehäuse 12 lassen sich Lichtleiter 13 auf konventionelle Weise mittels Steckerverbindungen 14 so anbringen, dass sie das von den Linsen 12 fokusierte Bild-Segment übernehmen und einem Bildverstärker 15 zuführen. Der Bildverstärker 15 ist mit einer CCD-Kamera verbunden, welche das erfasste Bild in elektronische Signale umwandelt.

Ersichtlicherweise können dabei analog zum Ausführungsbeispiel gemäss Figur 2 vier Linsen 10 entsprechend mit Prismen 7a zusammenwirken, um die Abbildungsoberfläche in vier Segmente I, II, III, IV zu unterteilen. Dementsprechend müssten auch vier Stecker 14 und vier Bildverstärker 15 sowie vier Kamera-Systeme 8 vorgesehen werden.

Die Erfindung ist dabei selbstverständlich weder auf CCD-Kameras noch auf den Einsatz spezifischer Umlenkanordnungen, wie Spiegel oder Prismen beschränkt.

## Patentansprüche

1. Anordnung zum elektronischen Erfassen eines Röntgenbilds, mit einem Converter (4) zum Umwandeln von Röntgenstrahlen in ein auf einer Abbildungsfläche (5) dargestelltes Bild, welche Anordnung im Strahlengang (9) einer Röntgenröhre angeordnet werden kann,
und mit elektronischen Kamerasystemen (8), wobei das auf der Abbildungsfläche dargestellte Bild durch Reflexion auf die Kamerasysteme (8) umlenkbar ist und wobei das auf die Kamerasysteme (8) umgelenkte Bild von den Kamerasystemen (8) in elektrische Signale umwandelbar ist,
dadurch gekennzeichnet, dass die Anordnung wenigstens zwei Umlenkanordnungen (6), insbesondere Spiegel (7) aufweist, mit welchen das auf der Abbildungsfläche (5) dargestellte Bild in Bildsegmente (I, II, III, IV) aufgeteilt und auf wenigstens zwei elektronische Kamerasysteme (8) umgelenkt wird, wobei die Umlenkanordnungen derart angeordnet sind, dass die Höhe des Gesamtaufbaus im Vergleich zu einer Anordnung mit einer Umlenkanordnung reduziert wird.

2. Anordnung nach Anspruch 1, dadurch gekennzeichnet, dass die Umlenkanordnungen (6) durch zwei V-förmig zu einer Achse der Abbildungsfläche (5) angeordnete Spiegel (7) gebildet sind.

3. Anordnung nach Anspruch 1, dadurch gekennzeichnet, dass die Umlenkanordnungen (6) je ein Prisma (7a) aufweisen.

4. Anordnung nach einem der vorangegangenen Ansprüche, dadurch gekennzeichnet, dass der Bild-Strahlengang (9) zwischen je einem Spiegel (7) und einem Kamera-System (8) etwa parallel zum Bild auf der Abbildungsfläche (5) verläuft.

5. Anordnung nach einem der vorangegangenen Ansprüche, dadurch gekennzeichnet, dass die Kamera-Systeme (8) eine CCD-Kamera enthalten.

6. Anordnung nach einem der vorangegangenen Ansprüche, dadurch gekennzeichnet, dass die Kamera-Systeme (8) seitlich neben dem Converter (4) und/oder einem den Converter (4) und die Umlenkanordnungen (6) enthaltenden Gehäuse (12) angeordnet sind.

7. Anordnung nach Anspruch 6, dadurch gekennzeichnet, dass die Kamera-Systeme (8) auswechselbar sind.

8. Anordnung nach einem der vorangehenden Ansprüche, dadurch gekennzeichnet, dass die Umlenkanordnungen (6) derart angeordnet sind, dass sich die Bildsegmente (I, II, III, IV) leicht überlappen.

9. Anordnung nach einem der vorangehenden Ansprüche, dadurch gekennzeichnet, dass die Umlenkanordnungen (6) bezogen auf eine Ebene senkrecht zu der Abbildungsfläche (5) symmetrisch angeordnet sind.

10. Anordnung nach einem der vorangehenden Ansprüche, dadurch gekennzeichnet, dass das auf der Abbildungsfäche (5) dargestellte Bild mit den Umlenkanordnungen (6) in Bildsegment (I, II, III, IV) aufteilbar ist, welche mit den Umlenkanordnungen (6) auf vier Kamera-Systeme (8) umlenkbar sind.

11. Anordnung nach einem der Ansprüche 1 bis 9, dadurch gekennzeichnet, dass das auf der Abbildungsfläche (5) dargestellte Bild in vier Bildsegmente (I, II, III, IV) aufteilbar ist, welche jeweils paarweise umlenkbar sind, wobei jedes Bildsegmentpaar je auf ein Kamera-System (8b, 8c) umlenkbar ist.

12. Anordnung nach einem der vorangegangenen Ansprüche, dadurch gekennzeichnet, dass die Umlenkanordnungen (6) die den Bildsegmenten (I, II, III, IV) zugeordnete Strahlen in unterschiedliche Richtungen umlenken.

13. Verfahren zum elektronischen Erfassen eines durch Röntgenstrahlung auf der Oberfläche eines Converters (4) erzeugten sichtbaren Bildes,
wobei die vom Converter (4) abgegebenen Lichtstrahlen durch Reflexion etwa parallel zur Oberfläche des Converters (4) umgelenkt werden
und wobei die umgelenkten Lichtstrahlen durch ein Kamerasystem (8) erfasst und in elektrische Signale umgewandelt werden,
dadurch gekennzeichnet, dass im wesentlichen von einander verschiedene Segmente (I, II, III, IV) von wenigstens zwei Umlenkanordnungen (6) erfasst werden, wobei das Bild aufgeteilt und auf wenigstens zwei Kamera-Systeme umgelenkt wird.
